# EUROPEAN PATENT APPLICATION

(11) **EP 1 213 870 A1**
(43) Date of publication of application: **12.06.2002**
(21) Application number: 01120117.5
(22) Date of filing: 22.08.2001
(51) Int. Cl.: H04L 1/20

(54) **Jitter generation with delay unit**

(71) Applicant: Agilent Technologies, Inc. (a Delaware corporation), Palo Alto, CA 94303 (US)
(72) Inventor: Moll, Joachim, 71083 Herrenberg (DE); Lazar, Alexander, 75356 Holzbronn (DE)
(74) Representative: Barth, Daniel

(57) **Abstract**

A signal generation unit (10, 20) for providing digital test signals for a device under test - DUT - (40) comprises a signal generator (10) for generating a digital test signal with defined timing. A controllable delay unit (20) receives and delays the digital test signal by a controllable variable time delay, whereby a control unit (35) controls the time delay of the delay unit (20) in order to induce a defined jitter function as well as a defined jitter spectrum to the digital test signal.

## Description

### BACKGROUND OF THE INVENTION

The present invention relates to digital data communication testing.

Jitter in digital data communication generally represents the deviation of actual from ideal timing points (such as transitions between different logical states). The term "jitter frequency" thereby represents the frequency of deviations about an ideal timing point, and the term "jitter amplitude" represents the actual or maximal deviation from the ideal timing point.

ITU-T G.701 defines jitter as short-term non-cumulative variations of the significant instants of a digital signal from their ideal positions in time. The significant instant can be any convenient, easily identifiable point on the signal such as the rising or falling edge of a pulse or the sampling instant. By plotting the relative displacement in the instants between an ideal pulse train and a real pulse train which has some timing jitter, the so called jitter function is obtained. Typically, the jitter function is not sinusoidal. In addition to the jitter time function, the jitter spectrum could be displayed in the frequency domain.

More information about jitter is disclosed in the Application Note 1267, "Frequency agile jitter measurement system", 5963-5353E, April 1995, by Hewlett-Packard, see e.g. under:
http://www.tm.agilent.com/classes/MasterServlet?view=applicationnote&apn -ItemID=1000000272&language=eng&locale=US.

Since jitter generally occurs in each actual data transmission system, many testing systems purposely generate testing signals with controlled jitter in order to simulate real world signals.

A conventional way for generating jitter signals is to modulate clock signal applied for generating the testing signals. Modulating the clock signals thus modulates the timing references within the testing signals resulting in a jitter induced testing signal whereby the amount of jitter can be controlled by the modulation. In most such applications, the clock is modulated using voltage controlled oscillators (VCO), which, however, only allow generating jitter frequencies in the range of 10MHz.

### SUMMARY OF THE INVENTION

It is an object of the present invention to provide an improved jitter generation. The object is solved by the independent claims. Preferred embodiments are shown by the dependent claims.

According to the present invention, a signal output of a signal generator is applied to a controllable delay unit, thus allowing to induce a jitter signal to the output signal of the signal generator by controlling the time delay of the delay unit. The terms 'time delay' and 'delay time' with respect to delay units shall be understood herein as synonyms. The output signal of the delay unit can then be supplied to a device under test (DUT). The response signal of the DUT to the applied jitter signal can be received and further processed by a testing unit.

The delay unit is preferably selected to provide a broad-band data transmission in order to limit signal distortion caused by the delay unit. The delay unit can be any adequate delay unit as known in the art that allows delaying digital signals as provided by the signal generator. Preferably, the delay unit is embodied by a delay unit as described in detail in EP-A-853385 by the same applicant. By applying adequate delay units, the jitter frequency can be significantly increased to ranges of 1GHz, thus bringing the jitter frequency in the range of data rates of current data transmission system. This, however, allows generating deterministic jitter signals for measuring high frequency jitter behavior.

Controlling the time delay of the delay unit allows modulating different jitter functions onto the signal output from the signal generator. Any kind of jitter functions such as sinusoidal, triangular or rectangular jitter functions can be generated.

In a preferred embodiment, the delay unit is switchable between the signal generator and the DUT, so that e.g. the delay unit can be bypasses in case of no jitter signals are required for the DUT.

The invention can be partly embodied or supported by one or more suitable software programs, which can be stored on or otherwise provided by any kind of data carrier, and which might be executed in or by any suitable data processing unit. Such software programs can in particular be used for controlling the controllable delay unit.

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).

Figures 1 and 2 show preferred embodiments according to the present invention.

Figures 3A-D illustrate the jitter generation according to the invention in so-called eye diagrams.

### DETAILED DESCRIPTION OF THE INVENTION

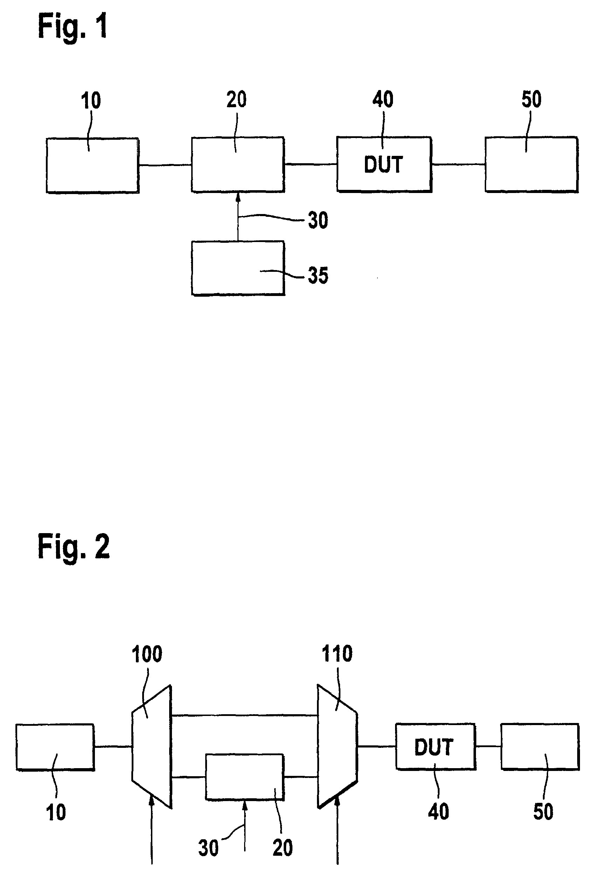

In Figure 1, a signal generator 10 is applied for generating ideal digital test signals such as test patterns, clock signals or pulses. The signal output from the signal generator 10 is provided to a delay unit 20 having a control input 30 for controlling the time delay of the delay unit 20. A control unit 35 coupled to the control input 30 controls the delay unit 20, so that the delay unit 20 provides a controlled delay to the applied signal output, thus resulting in a jitter signal with respect to the signal output. Jitter amplitude can be controlled by controlling the time delay, while jitter frequency can be controlled by varying the time delay.

The jitter signal as output from the delay unit 20 is provided to a DUT 40, and the signal response of the DUT 40 to the applied jitter signal is received by a receiving unit 50. Further signal processing devices and units can be coupled to the receiving unit 50 in order to further process or evaluate the signals received from the DUT 40.

In operation, the signal generator 10 provides a test signal for testing the DUT 40. The test signal can be regarded as an ideal test signal, ideal in a sense that the test signal has timing points with substantially no jitter. In order to controllably induce jitter onto the test signal applied from the signal generator 10, the test signal is delayed by the delay unit 20, whereby the jitter frequency and jitter amplitude can be controlled by varying the time delay of the delay unit. Thus, the DUT 40 receives a test signal with controlled jitter portion.

Figure 2 shows an alternative embodiment, wherein the delay unit 20 is switchable between the signal generator 10 and the DUT 40. The output of the signal generator 10 is coupled to a multiplexer 100 for switching the output of the signal generator either to the delay unit 30 or directly to a demultiplexer 110 which further receives the output from the delay unit 20. The output of the second switch 110 is coupled to the input of the DUT 40. Thus, by controlling the switching of the switches 100 and 110, the delay unit 30 can be switched either between the signal generator 10 and the DUT 40, or the DUT 40 may directly receive the signal output from the signal generator 10. It is clear that instead of the multiplexer 100 and/or the demultiplexer 110 other suitable switching means can be applied accordingly.

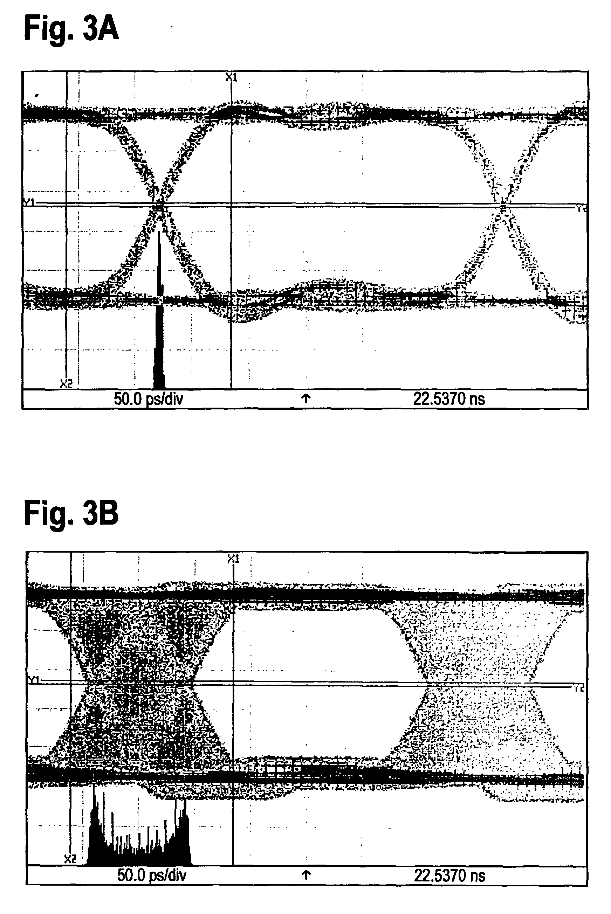

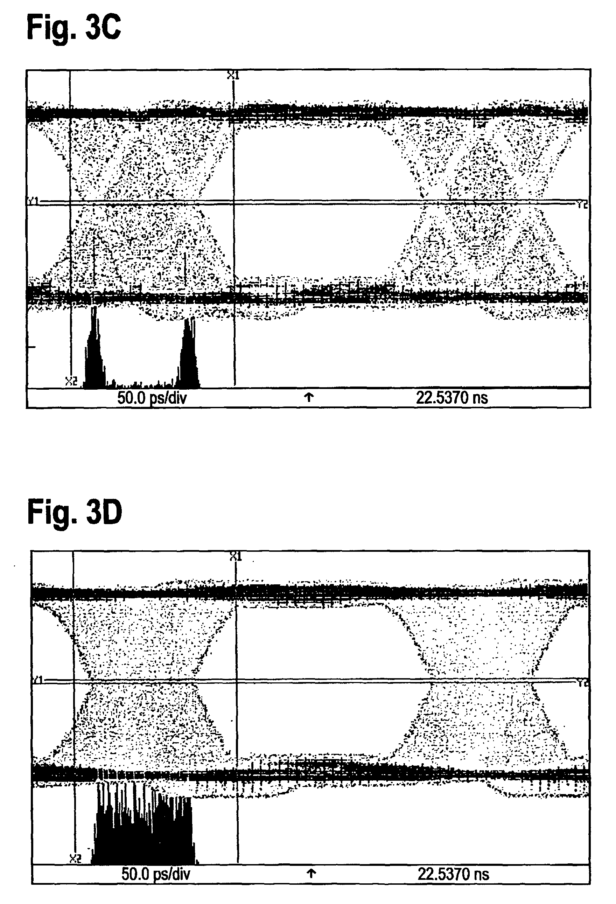

The jitter generation according to the invention shall now be illustrated in Figures 3A-D, making use of so-called eye diagrams showing a representation of multiple transitions between logical states. Eye diagrams are described in more detail in the European Patent Application No. 01106632.1. Fig. 3A shows an example of an eye diagram for the signal output (data signal: PRBS 2³¹⁻¹; 3.3Gbit/s; 1.6V peak to peak amplitude) from the signal generator 10 BEFORE being provided to the delay unit 20. Figs. 3B-D show resulting eye diagrams for the same signal output from the signal generator 10 as shown in Fig. 3A, however, AFTER being provided to the delay unit 20. The eye diagram of Fig. 3B results from a sinusoidal shaped control signal applied to the delay unit 20, the eye diagram of Fig. 3C results from a rectangular shaped control signal applied to the delay unit 20, and the eye diagram of Fig. 3D results from a triangle shaped control signal applied to the delay unit 20. The jitter frequency in Figs. 3B-D is 10MHz with same peak to peak amplitudes. This leads to a constant peak to peak jitter amplitude of about 70ps.

## Claims

1. A signal generation unit (10, 20) for providing digital test signals applicable for a device under test - DUT - (40), comprising:
a signal generator (10) adapted for generating a digital test signal with defined timing,
a controllable delay unit (20) adapted to receiving and delaying the digital test signal by a controllable variable time delay,, and
a control unit (35) adapted for controlling the time delay of the delay unit (20) in order to induce a defined jitter function and/or a defined jitter spectrum to the digital test signal.

2. The signal generation unit (10, 20) of claim 1, wherein the delay unit (20) provides a broad-band data transmission in order to limit signal distortion caused by the delay unit.

3. The signal generation unit (10, 20) of claim 1 or 2, further comprising at least one switch (100, 110) for switching the delay unit (20) between the signal generator (10) and the DUT (40).

4. A method for providing digital test signals comprising the steps of:
(a) generating a digital test signal with defined timing,
(b) delaying the digital test signal by a controllable variable time delay, and
(c) controlling the time delay in order to induce a defined jitter function and/or a defined jitter spectrum to the digital test signal.

5. The method of claim 4, wherein step (c) comprises a step of modulating the digital test signal in order to result in any of a sinusoidal, triangular, rectangular, Gaussian, or discrete line shape of the jitter function or the jitter spectrum.

6. The method of claim 4 or 5, wherein the step (a) of generating the digital test signal comprises a step of generating at least one of a digital test pattern, a clock signal, or a pulse signal.

7. A software program or product, preferably stored on a data carrier, for executing step (c) of claim 4 or any one of claims 5-6, when run on a data processing system such as a computer.
